(19) Europäisches Patentamt
European Patent Office
Office européen des brevets

(11) EP 0 364 650 B1

(12) EUROPEAN PATENT SPECIFICATION

(45) Date of publication and mention
of the grant of the patent:
09.10.1996 Bulletin 1996/41

(51) Int Cl.6: **C04B 35/50**, G21C 7/10, G21C 7/24

(21) Application number: 89101107.4

(22) Date of filing: 23.01.1989

(54) **Sintered polycrystalline neutron-absorbent bodies comprising lanthanide rare-earth oxides and same water stabilized with a 4A-group metal oxide.**

Polykristalline neutronenabsorbierende Sinterkörper, die Seltenerdmetall-Oxide enthalten und solche Sinterkörper die mit einem Metalloxid der Gruppe 4A gegen Wasser stabilisiert sind.

Corps frittés polycristallins capables d'absorber les neutrons, comprenant des oxydes lanthanide de terres-rares, ainsi que ces mêmes corps comprenant un oxyde metallique du groupe 4A, conférant à ceux-ci une resistance à l'eau.

(84) Designated Contracting States:
CH DE ES FR IT LI NL SE

(30) Priority: 19.10.1988 US 260211

(43) Date of publication of application:
25.04.1990 Bulletin 1990/17

(73) Proprietor: GENERAL ELECTRIC COMPANY
Schenectady New York 12305 (US)

(72) Inventors:
• van Diemen, Paul
San Jose California 95120 (US)
• Lay, Kenneth Wilbur
Schenectady New York 12309 (US)
• Proebstle, Richard Allan
San Jose, California 95120 (US)

(74) Representative: Szary, Anne Catherine et al
London Patent Operation,
GE Technical Services Co. Inc.,
Essex House,
12-13 Essex Street
London WC2R 3AA (GB)

(56) References cited:
DE-B- 2 637 227          GB-A- 0 874 882
JP-A-56 079 993          JP-B-62 049 950
US-A- 3 634 113          US-A- 3 849 248
US-A- 4 324 615

• Handbook of Chemistry and Physics, CRC Press, 53rd ed., page B-131 1972-1973

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to the production of a sintered polycrystalline body comprising a lanthanide rare earth oxide. The sintered body is a neutron-absorbable material which can be made resistant to water corrosion and which is particularly useful as a control rod material for water-cooled nuclear reactors.

In a nuclear reactor, the fissionable material or nuclear fuel is enclosed in a container to form a fuel element. The fuel elements are assembled together in a lattice at fixed distances from each other in a coolant flow channel or region forming a fuel assembly, and sufficient fuel assemblies are combined to form the nuclear fissionable chain reacting assembly or reactor core capable of a self-sustained fission reactor. The core is enclosed within a reactor vessel through which a coolant is passed.

Control rods are used in nuclear fuel reactors to control power generation levels by being moved in and out of the coolant in the reactor core as needed. Generally, they are comprised of a control rod material contained within a protective metal cladding. To be effective, the control rod material must be neutron-absorbent. Under operating conditions, the metal cladding is a substantially stable material which functions to prevent contact between the control rod material and the coolant.

Boron carbide is presently used as a control rod material for nuclear reactors. It suffers from the disadvantage that helium is formed from the $\eta$, alpha reaction during neutron capture. Boron-10 undergoes a single neutron interaction which then renders the isotope ineffective as an absorber. This limits the usefulness of boron carbide for use in long-life control rod assemblies.

Several lanthanide oxides (especially oxides of Eu, Er, Sm, Gd, and Dy) are of interest as replacements for boron carbide for long-life control elements. None of these high molecular weight elements form helium during neutron capture. All of these lanthanide oxides have multiple stable isotopes which transmute to another effective neutron absorber after an $\eta$ gamma capture reaction. This provides for longer service in long-life control rod assemblies.

However, one possible disadvantage of these oxides is their potential for reactivity with water to form hydroxides. If the protective cladding on the control rod is rendered inactive, it is possible that the oxide will be leached from the control rod or that swelling from the formation of hydroxides will deform the control rod. It would be desirable to have lanthanide oxide composition which would be more resistance to water corrosion.

In the present invention, additions of a group 4A metal oxide comprising hafnium, zirconium and titanium to lanthanide oxides greatly improves their resistance to water corrosion. The new compositions are potential long-life replacements for the present boron carbide control rod materials.

Briefly stated, the present invention provides a sintered polycrystalline neutron-absorbent body characterized in that it consists of a single phase of lanthanide rare earth oxide selected from dysprosium oxide, erbium oxide, europium oxide, gadolinium oxide, samarium oxide, a combination thereof, and a water stabilizing oxide from a 4A-group metal oxide, said body being comprised of grains of the cubic structure of the rare earth oxides and having a porosity of less than 10%.

The present invention also provides for a process for making the above defined sintered body which comprises forming a particular mixture of the required components, forming the obtained mixture into a compact and sintering said compact at 1500 to 2000°C.

The present process includes forming a particulate mixture of a group 4A metal oxide such as hafnium oxide ($HfO_2$) and a lanthanide rare earth oxide selected from the group consisting of dysprosium oxide ($Dy_2O_3$, erbium oxide ($Er_2O_3$), europium oxide ($Eu_2O_3$), gadolinium oxide ($Gd_2O_3$, samarium oxide ($Sm_2O_3$ and a combination thereof, said hafnium oxide ranging from 10% by weight to 25% by weight of said mixture, forming said mixture into a compact and sintering the compact at a temperature ranging from 1500°C to 2000°C to produce a sintered body wherein the outside surface of said body has no significant open porosity and wherein said body has a porosity of less than 10% by volume of said body.

The present sintered body is a polycrystalline material comprised of grains having the cubic structure of the rare earth as ascertained by x-ray diffraction analysis.

In carrying out the preferred embodiment of the present process, a mixture of the group 4A metal oxide water corrosion stabilizer and the lanthanide oxide is formed. The corrosion stabilizing metal oxide can range from 10% by weight to 25% by weight, preferably from greater than 10% by weight to less than 20% by weight, and most preferably it is about 12% by weight, of the mixture. Amounts of corrosion stabilizing metal oxides below 10% by weight may not produce a ceramic sufficiently resistant to water corrosion to make it useful as a control rod material in a water-cooled nuclear reactor. Amounts of the stabilizing metal oxide higher than 25% by weight will not produce the present ceramic body comprised of grains having the cubic structure of the rare earth. Both hafnium oxide and the present lanthanide oxide are known in the art as neutron-absorbent materials. However, the neutron absorbency of the present lanthanide oxides is significantly or substantially greater than that of the preferred hafnium oxide corrosion stabilizer. The greater the neutron absorbency of a material, the more effective it is as a control rod material. As the amount of hafnium oxide is increased in the present sintered body, its neutron-absorbency is decreased. A sintered body containing significantly more than 25% by weight hafnium oxide will have a significantly or substantially lower neutron absorbency.

In a preferred embodiment of the invention the lanthanide rare earth oxide is comprised of a combination of 15-35% by weight of europium oxide and 65-85% by weight of dysprosium oxide.

In a further preferred embodiment of this invention the lanthanide rare earth oxide is comprised of a combination of 20% by weight of europium oxide and 80% by weight of dysprosium oxide.

The group 4A metal oxides and lanthanide oxides used in the present process are sinterable powders. Generally, they have a specific surface area ranging from 2 to 12 square meters per gram, preferably from 4 to 8 square meters per gram. Such powders allow sintering to be carried out within a reasonable length of time at the present sintering temperature.

The corrosion stabilizing metal oxides comprising hafnium oxide and a lanthanide oxide can be admixed by a number of conventional techniques such as, for example, ball milling, to produce at least a significantly or substantially uniform mixture. The more uniform the mixture, the more uniform is the microstructure, and therefore, the properties of the resulting sintered body.

A number of conventional techniques can be used to shape or press the mixture into a compact. For example, it can be extruded, injection molded, die pressed or isostatically pressed to produce the compact of desired shape. Any lubricants, binders or similar materials used to aid shaping of the mixture should have no significant deleterious effect on the compact or the resulting sintered body. Such shaping-aid materials are preferably of the type which evaporate on heating at relatively low temperatures, preferably below 500°C, leaving no residue, or no significant residue. Preferably, the compact has a porosity of less than 60% and more preferably less than 50% to promote densification during sintering.

The compact can have any desired configuration such as, for example, a sphere, cylinder or plate. Preferably, it is in the shape desired of the sintered body.

The compact is sintered under conditions which will produce the present sintered body. The compact is stable in a variety of atmospheres and as a practical matter it is sintered in an atmosphere which depends largely on the particular furnace available. Representative of useful atmospheres are hydrogen, air, and a noble gas, for example, argon and helium. Preferably, the atmosphere is at or about atmospheric pressure. Sintering also can be carried out in a vacuum. The atmosphere or vacuum should have no significant deleterious effect on the compact or sintered body.

The rate of heating to sintering temperature is limited largely by how fast any by-product gases are removed prior to sintering and generally this depends on the gas flow rate through the furnace and its uniformity therein as well as the amount of material in the furnace. Generally, a rate of heating of from 50°C per hour to 300°C per hour is used until by-product gases have been removed from the furnace, and this may be determined empirically by standard techniques. The rate of heating can then be increased, if desired, to a range of 300 to 500°C per hour and as high as 800°C per hour but should not be so rapid as to crack the bodies.

The compact is sintered at a temperature at which the hafnium oxide or other group 4A oxides and the lanthanide oxide are solid. Generally, sintering temperature ranges from 1500 to 2000°C, frequently from 1700 to 1900°C.

The compact is maintained at sintering temperature for a time required to produce the present sintered body. Time at sintering temperature is determinable empirically with lower temperatures generally requiring longer times.

Sintering is carried out at least until the sintered body has a porosity of less than 10% and until substantially all of the pores in its outside surface are closed. Specifically, the sintered body should have an outside surface free of significant open porosity. A number of conventional techniques can be used to determine such closed porosity at the surface. For example, it can be determined by mercury intrusion porosimetry. Generally, all or substantially all of the pores of the sintered body are closed, i.e. non-interconnecting, when it has a porosity ranging up to 7%, or up to 10% by volume.

Upon completion of sintering, the sintered product is cooled to produce the present sintered body, and usually it is cooled to ambient or to about room temperature, which generally ranges from 20 to 30°C. The rate of cooling of the sintered product or body is not critical, but it should not be so rapid as to crack the body. Specifically, the rate of cooling can be the same as the cooling rates normally used in commercial sintering furnaces. These cooling rates may range from 100 to 800°C per hour. The sintered product or body can be cooled in the same atmosphere in which it was sintered or a different atmosphere which has no significant deleterious effect thereon.

Generally, in the present process, there is no loss, or no significant loss, of the group 4A metal oxide or lanthanide oxide.

The present sintered body is comprised of the preferred hafnium oxide and the present lanthanide oxide. The hafnium oxide ranges from 10% by weight to 25% by weight, preferably from greater than 10% by weight to less than 20% by weight, and more preferably from 11% by weight to 15% by weight, of the body. Most preferably, hafnium oxide comprises about 12% by weight of the body. In a preferred embodiment, the present sintered body is comprised of about 12% by weight hafnium oxide, about 18% by weight of europium oxide and about 70% by weight of dysprosium oxide.

The present sintered body is a single phase material. The phase can be represented by the formula $Ln_{2-y}Hf_yO_{3+y/2}$.

Generally, the present sintered body has an average grain size ranging from 5 micrometers to 250 micrometers, frequently from 25 micrometers to 250 micrometers, and more frequently from 25 micrometers to about 50 micrometers.

The present sintered body has a porosity of less than 10% by volume, preferably less than 6% by volume, more preferably less than 5% by volume, of the body. The less porosity the sintered body has, the better is its neutron absorbency. Preferably, pores in the sintered body are significantly or substantially uniformly distributed in the body.

Ordinarily, the dimensions of the present sintered body differ from those of the unsintered body by the extent of shrinkage, i.e. densification, which occurs during sintering.

The present sintered body containing the group 4A metal oxide corrosion stabilizer is resistant to water corrosion. After four hours in steam at 288°C, it shows no significant weight loss, that is any weight loss under such conditions would be less than 0.01% by weight of the body.

It is, however, possible to dispense with the metal oxide water corrosion stabilize ingredient when the integrity of the housing container for the lanthanide oxide neutron absorbent can be assured against breaching through effective design, durable materials and flawless workmanship. For example, an embodiment can comprise about 25 weight percent of europium oxide combined with about 75 weight percent of dysprosium oxide, enclosed and sealed within a high strength, break resisting housing container.

Generally, to form a control rod, a plurality of the present sintered bodies are confined within a metal rod or cladding. Generally, the metal is stainless steel.

The invention is further illustrated by the following examples wherein the procedure was as follows, unless otherwise stated:

Sinterable powders of hafnium oxide and the lanthanide rare earth oxide were used.

The powders were admixed in a standard manner by stirring to produce a substantially uniform mixture.

The mixture was die pressed in a steel die to give a green body in the form of a disc with a porosity of about 50%.

The sintering atmosphere was hydrogen.

The sintering atmosphere was at or about atmospheric pressure.

Sintering was carried out in a refractory metal furnace with tungsten heating elements and tungsten and molybdenum heat shields.

The sintered bodies were furnace cooled to about room temperature.

Density was determined in a standard manner by weighing the sintered body and measuring its dimensions.

Porosity of the sintered body was determined by knowing or estimating the theoretical density of the sintered body on the basis of its composition and comparing that to the density measured using the following equation:

$$\text{porosity} = (1 - \frac{\text{measured density}}{\text{theoretical density}})\,100\%$$

Average grain size of the sintered body was determined in a standard manner by the line intercept method. Specifically, a line was drawn on a photomicrograph of a polished and etched cross-section of the sintered body, and the grain boundaries intercepting along a specific length of line were counted and divided into that specific length of line to give an average grain intercept length in terms of $\mu$m. That value was then multiplied by 1.5 to determine the average grain size.

The sintered body was characterized by a number of standard techniques.

### EXAMPLE 1

Compacts comprised of 84% by weight $Dy_2O_3$ and 16% by weight of $HfO_2$ were sintered at 1900°C for 4 hours. The porosity determined on one of the sintered samples was about 6% by volume. From other work it was known that the outside surface of the sintered bodies was essentially a closed pore surface, i.e. it had no significant open porosity. Another sintered sample was determined to have an average grain size of 16 micrometers. X-ray diffraction analysis of another of the sintered samples showed that it was single phase and had a cubic rare earth structure.

Compacts comprised of 46% by weight $Dy_2O_3$ and 54% by weight $HfO_2$ were sintered at 1900°C for 4 hours. The porosity determined on one of the sintered samples was about 7%. Another sintered sample was determined to have an average grain size of 19 micrometers. X-ray diffraction analysis of another of the sintered samples showed that it had a fluorite structure.

A compact comprised of 100% $Dy_2O_3$ was sintered at 1800°C for 4 hours. The porosity determined on a piece of the sintered sample was about 9%. X-ray diffraction analysis of another piece of the sintered sample showed that it had a cubic rare earth structure. A piece of the sintered sample was tested.

The reactivity of the sintered samples with high-pressure, high-temperature water was determined in an autoclave. The autoclave was temperature controlled with the pressure determined by the boiling point pressure of water at the control temperature. About two hours were required to reach temperature at the start of a run. The samples were held in a Monel mesh holder located about 2.5cm (one inch) from the axis of a shaft which was rotated in the water at approximately 100 rpm.

The test conditions were 288°C for one hour. The pure dysprosium oxide samples was gone from the same holder and presumably totally reacted with the water to form a hydroxide. The other two samples i.e. one comprised of 84% by weight $Dy_2O_3$ and 16% by weight of $HfO_2$ and one comprised of 46% by weight $Dy_2O_3$ and 54% by weight $HfO_2$, showed little evidence of reaction with the water.

## EXAMPLE 2

A sintered body comprised of 84% by weight of dysprosium oxide and 16% by weight of hafnium oxide was produced in substantially the same manner set forth in Example 1.

The reactivity of the sintered sample was determined in an autoclave in substantially the same manner set forth in Example 1 except as noted herein. The sintered sample was polished to remove most of a surface coating of molybdenum and tungsten oxide contamination resulting from the sintering furnace. The sample was also measured and weighed before the autoclave test. There was no discernible change in the sample after four hours at 288°C. Specifically, the sample showed a negligible 0.00003 gram weight loss for 1.27375 gram sample.

## EXAMPLE 3

The high corrosion rate of $Dy_2O_3$ was confirmed by a series of lower temperature tests. The tests were done using a piece of the $Dy_2O_3$ sintered disc produced in Example 1. Initially the sample was placed in boiling water at 100°C for one hour. There was no measurable weight change and the sample appearance was unchanged when examined at 36x in a microscope. The same sample was then tested in the autoclave in substantially the same manner set forth in Example 1 except as noted herein. It was placed in the autoclave for one hour at 177°C. Again no weight change could be detected. The sample was then autoclaved for one hour at 225°C. The sample disintegrated completely.

Neutron absorbing materials and/or their mass can be selectively deployed in a control unit to provide a pattern of neutron absorption capacity which matches the uneven neutron flux density encountered by the control unit in the reactor fuel core environment. Typically in a boiling water reactor system, the neutron flux density is greater at the upper end of a control unit inserted from the bottom of the reactor, and also greater at the outer edge portion of a blade type control unit such as the common cruciform shaped devices. Thus the neutron absorbing body and material contained within the control unit can be varied and patterned in its mass and/or composition throughout the unit to provide increased neutron absorption capacity in areas thereof such as across the upper portion of the radially extending blades and/or also along the length of the outermost vertical edge of such blades. With such arrangements the increased mass or cost of higher absorptive capacity is not unnecessarily utilized and wasted in areas of minimum need due to customizing or matching capacity of the unit with the encountered flux pattern environment.

In a pressure water reactor system the neutron absorbing materials and/or their mass can likewise be selectively deployed within the control rods or other units to provide a pattern of neutron absorption capacity matching the uneven neutron flux density which is encountered within the reactor fuel body.

The lanthanide rare earth oxide neutron absorbents of this invention can be utilized with other neutron absorbents such as boron carbide, with each deployed in predetermined zones within a control unit as a means of customizing and matching the neutron absorbing capacity of the unit to that of the environment of its service within a reactor fuel core.

## Claims

1. A sintered polycrystalline neutron-absorbent body useful as a control rod material in a nuclear reactor characterized in that it consists of a single phase of a lanthanide rare-earth oxide selected from dysprosium oxide, erbium oxide, europium oxide, gadolinium oxide, samarium oxide or a combination thereof, and 10 to 25% by weight of said body of a water stabilizing oxide selected from a 4A-group metal oxide, said body being comprised of grains of the cubic structure of the rare-earth oxides and having a porosity of less than 10% by volume.

2. The sintered body of claim 1, characterized in that said 4A-group metal oxide is present in amounts from 10% by weight to 20% by weight of said body.

3. The sintered body of claim 1 or 2, characterized in that said 4A-group metal oxide is hafnium oxide.

4. The sintered body of anyone of claims 1 to 3, characterized in that said lanthanide rare earth oxide is comprised of 15-35% by weight of europium oxide and 65-85% by weight of dysprosium oxide.

5. The sintered body of claim 4, characterized in that said lanthanide rare earth oxide is comprised of 20% by weight of europium oxide and 80% by weight of dysprosium oxide.

6. The sintered body of claim 1, characterized in that it comprises 12% by weight of said water stabilizing oxide, 18% by weight europium oxide and 70% by weight of dysprosium oxide.

7. The sintered body of anyone of the preceding claims, characterized in that the outside surface of said body is free of open porosity.

8. A control rod for a nuclear reactor, characterized in that it consists of a sintered polycrystalline neutron-absorbent body of a single phase of a lanthanide rare-earth oxide selected from dysprosium oxide, erbium oxide, europium oxide, gadolinium oxide, samarium oxide or a combination thereof, said body being comprised of grains of the cubic structure of the rare earth oxides and having a porosity of less than 10% by volume, contained in a high strength, break resisting, protective metal cladding.

9. A control rod for a water-cooled nuclear reactor comprised of a plurality of bodies of neutron absorbent material confined within a metal cladding, characterized in that said bodies are as set forth in anyone of claims 1 to 7.

10. A process for producing a sintered body as set forth in anyone of claims 1 to 7, characterized in that it comprises forming a particulate mixture of the required components, forming the obtained mixture into a compact and sintering said compact at 1500 to 2000°C.

11. The process of claim 10, characterized in that said sintering is carried out in an hydrogen atmosphere.

12. The process of claim 10 or 11, characterized in that said sintering is carried out at a temperature of 1700 to 1900°C.

13. The process according to anyone of claims 10 to 12, characterized in that said step of forming a compact comprises forming a compact having a porosity of less than 60%.

**Patentansprüche**

1. Gesinterter, polykristalliner, Neutronen absorbierender Körper, der als ein Regelstab-Material in einem Kernreaktor brauchbar ist, dadurch gekennzeichnet, daß er aus einer einzelnen Phase eines Lanthanid-Seltenerdoxids, ausgewählt aus Dysprosiumoxid, Erbiumoxid, Europiumoxid, Gadoliniumoxid, Samariumoxid oder einer Kombination davon und 10 bis 25 Gew.-% des Körpers aus einem gegenüber Wasser stabilisierenden Oxid besteht, ausgewählt aus einem Metalloxid der Gruppe 4A, wobei der Körper aus Körnern kubischer Struktur der Seltenerdoxide zusammengesetzt ist und eine Porosität von weniger als 10 Vol.-% aufweist.

2. Sinterkörper nach Anspruch 1, dadurch gekennzeichnet, daß das Metalloxid der Gruppe 4A in Mengen von 10 Gew.-% bis 20 Gew.-% des Körpers vorhanden ist.

3. Sinterkörper nach Anspruch 1 oder 2, dadurch gekennzeichnet, daß das Metalloxid der Gruppe 4A Hafniumoxid ist.

4. Sinterkörper nach einem der Ansprüche 1 bis 3, dadurch gekennzeichnet, daß das Lanthanid-Seltenerdoxid zusammengesetzt ist aus 15-35 Gew.-% Europiumoxid und 65-85 Gew.-% Dysprosiumoxid.

5. Sinterkörper nach Anspruch 4, dadurch gekennzeichnet, daß das Lanthanid-Seltenerdoxid zusammengesetzt ist aus 20 Gew.-% Europiumoxid und 80 Gew.-% Dysprosiumoxid.

6. Sinterkörper nach Anspruch 1, dadurch gekennzeichnet, daß er 12 Gew.-% des gegenüber Wasser stabilisierenden Oxids, 18 Gew.-% Europiumoxid und 70 Gew.-% Dysprosiumoxid umfaßt.

7. Sinterkörper nach einem der vorhergehenden Ansprüche, dadurch gekennzeichnet, daß die äußere Oberfläche des Körpers frei von offener Porosität ist.

8. Regelstab für einen Kernreaktor, dadurch gekennzeichnet, daß er aus einem gesinterten, polykristallinen Neutronen absorbierenden Körper aus einer einzelnen Phase eines Lanthanid-Seltenerdoxides besteht, ausgewählt aus Dysprosiumoxid, Erbiumoxid, Europiumoxid, Gadoliniumoxid, Samariumoxid oder einer Kombination davon, wobei der Körper zusammengesetzt ist aus Körnern der kubischen Struktur der Seltenerdoxide, und er eine Porosität von weniger als 10 Vol.-% aufweist und in einer bruchbeständigen, schützenden Metallhülle hoher Festigkeit enthalten ist.

9. Regelstab für einen wassergekühlten Kernreaktor, zusammengesetzt aus einer Vielzahl von Körpern aus Neutronen absorbierendem Material, das in einer Metallhülle eingeschlossen ist, dadurch gekennzeichnet, daß die Körper solche nach irgendeinem der Ansprüche 1 bis 7 sind.

10. Verfahren zum Herstellen eines Sinterkörpers nach einem der Ansprüche 1 bis 7, dadurch gekennzeichnet, daß es das Bilden einer Teilchenmischung aus den erforderlichen Komponenten, das Verarbeiten der erhaltenen Mischung zu einem Preßling und das Sintern des Preßlings bei 1.500 bis 2.000°C umfaßt.

11. Verfahren nach Anspruch 10, dadurch gekennzeichnet, daß das Sintern in einer Wasserstoff-Atmosphäre ausgeführt wird.

12. Verfahren nach Anspruch 10 oder 11, dadurch gekennzeichnet, daß das Sintern bei einer Temperatur von 1.700 bis 1.900°C ausgeführt wird.

13. Verfahren nach einem der Ansprüche 10 bis 12, dadurch gekennzeichnet, daß die Stufe des Bildens eines Preßlings das Bilden eines Preßlings mit einer Porosität von weniger als 60% umfaßt.

## Revendications

1. Corps polycristallin fritté, absorbeur de neutrons, utile comme matériau de barre de commande dans un réacteur nucléaire, caractérisé en ce qu'il comprend une phase unique d'un oxyde de terre rare du groupe des lanthanides choisi parmi l'oxyde de dysprosium, l'oxyde d'erbium, l'oxyde d'europium, l'oxyde de gadolinium, l'oxyde de samarium ou une combinaison de ceux-ci et de 10 à 25 % en poids par rapport audit corps d'un oxyde de stabilisation vis-à-vis de l'eau choisi parmi les oxydes d'un métal du groupe 4A, ledit corps contenant des grains de structure cubique des oxydes de terre rare et ayant une porosité inférieure à 10% en volume.

2. Corps fritté selon la revendication 1, caractérisé en ce que ledit oxyde d'un métal du groupe 4A est présent en une quantité comprise entre 10 et 20% en poids dudit corps.

3. Corps fritté selon la revendication 1 ou 2, caractérisé en ce que ledit oxyde d'un métal du groupe 4A est l'oxyde d'hafnium.

4. Corps fritté selon l'une quelconque des revendications 1 à 3, caractérisé en ce que ledit oxyde de terre rare du groupe des lanthanides comprend 15 à 35 % en poids d'oxyde d'europium et 65 à 85 % en poids d'oxyde de dysprosium.

5. Corps fritté selon la revendication 4, caractérisé en ce que ledit oxyde de terre rare du groupe des lanthanides comprend 20 % en poids d'oxyde d'europium et 80 % en poids d'oxyde de dysprosium.

6. Corps fritté selon la revendication 1, caractérisé en ce qu'il comprend 12 % en poids dudit oxyde de stabilisation vis-à-vis de l'eau, 18 % en poids d'oxyde d'europium et 70 % en poids d'oxyde de dysprosium.

7. Corps fritté selon l'une quelconque des précédentes revendications, caractérisé en ce que la surface extérieure dudit corps est exempte de porosités ouvertes.

8. Barre de commande pour réacteur nucléaire, caractérisée en ce qu'elle comprend un corps polycristallin fritté, absorbeur de neutrons, fait d'une phase unique d'un oxyde de terre rare du groupe des lanthanides choisi parmi l'oxyde de dysprosium, l'oxyde d'erbium, l'oxyde d'europium, l'oxyde de gadolinium, l'oxyde de samarium ou une combinaison de ceux-ci, ledit corps contenant des grains de structure cubique des oxydes de terre rare et ayant une porosité inférieure à 10% en volume, contenu dans une gaine métallique de protection, résistante à la rupture et à forte résistance mécanique.

9. Barre de commande pour réacteur nucléaire refroidi par eau, composée d'une pluralité de corps en matériau absorbeur de neutrons confinés dans une gaine métallique, caractérisée en ce que lesdits corps sont tels que revendiqués dans l'une quelconque des revendications 1 à 7.

10. Procédé de fabrication d'un corps fritté tel que revendiqué dans l'une quelconque des revendications 1 à 7, caractérisé en ce qu'il comprend la formation d'un mélange de particules des composants requis, la transformation du mélange obtenu en un comprimé et le frittage dudit comprimé à une température de 1500 à 2000 °C.

11. Procédé selon la revendication 10, caractérisé en ce que ledit frittage est effectué dans une atmosphère d'hydrogène.

12. Procédé selon la revendication 10 ou 11, caractérisé en ce que ledit frittage est effectué à une température de 1700 à 1900 °C.

13. Procédé selon l'une quelconque des revendications 10 à 12, caractérisé en ce que ladite étape de formation d'un comprimé comprend la formation d'un comprimé ayant une porosité inférieure à 60 %.